# EUROPEAN PATENT APPLICATION

(11) **EP 2 339 271 A1**
(43) Date of publication of application: **29.06.2011**
(21) Application number: 09821816.7
(22) Date of filing: 22.10.2009
(51) Int. Cl.: F25B 43/00, B01J 20/04, B01J 20/26, C09K 5/04, C10M 105/04, C10M 105/06, C10M 105/38, C10M 107/24, C10M 107/32, C10M 107/34, F25B 1/00, F25B 13/00, C10N 40/30

(54) **COOLING CYCLE DEVICE**

(30) Priority: 22.10.2008 JP 2008271714; 07.10.2009 JP 2009233750
(71) Applicant: Panasonic Corporation, Kadoma-shi Osaka 571-8501 (JP)
(72) Inventor: TAKAICHI, Kenji, 2-1-61 Shiromi, Chuo-ku Osaka 540-6207 (JP); SATO, Shigehiro, 2-1-61 Shiromi, Chuo-ku Osaka 540-6207 (JP)
(74) Representative: Henkel, Feiler & Hänzel
(86) International application number: PCT/JP2009/005545
(87) International publication number: WO 2010/047116

(57) **Abstract**

A refrigeration cycle apparatus wherein a compressor 21 into which refrigeration oil is charged, a first heat exchanger 22a, a refrigerant flow rate controller 23 such as a capillary tube and an expansion valve, a second heat exchanger 22b which is disposed in a space where air is conditioned, and an accumulator 31 are connected to one another through piping, thereby constituting a refrigeration cycle, a single refrigerant of hydrofluoroolefin or a mixture refrigerant having the hydrofluoroolefin as a basic ingredient is charged into the refrigeration cycle, and the refrigeration cycle includes an adsorbent device 32 into which an adsorbent 38 which adsorbs material having hydrofluoric acid as a main ingredient is charged. The present invention provides the reliable refrigeration cycle apparatus having long service life which does not deteriorate performance using an inexpensive method.

## Description

### [Technical Field]

The present invention relates to a refrigeration cycle apparatus using hydrofluoroolefin as a refrigerant without including chlorine, and more particularly, to a refrigeration cycle apparatus using adsorbent having hydrofluoric acid as a main ingredient.

### [Background Technique]

A compressor, a heat exchanger used for condensation and vaporization and an expansion device are connected to each other to form a refrigeration cycle apparatus, and the refrigeration cycle apparatus is used in conventional air conditioners, car air conditioners and water heaters. As a refrigerant charged into the refrigeration cycle apparatus, chlorofluorocarbon or hydrochlorofluorocarbon both having chlorine atom is used. However, the chlorofluorocarbon and hydrochlorofluorocarbon destroy ozone layer, and since they stay in atmosphere for a long time, they have high greenhouse effect, they affect global warming, and they are not eco-friendly refrigerant.
Hence, refrigeration cycle apparatuses have been put into practical use which do not use chlorofluorocarbon or hydrochlorofluorocarbon. This refrigeration cycle apparatus uses, as a refrigerant, carbon dioxide (CO₂ refrigerant, hereinafter) or isobutane whose ozone depletion potential is zero and which have much smaller global warming potential as compared with chlorofluorocarbon and hydrochlorofluorocarbon.
However, in the air conditioners, the car air conditioners and the water heaters, hydrofluorocarbon is used due to performance and a problem caused when a refrigerant leaks, but the global warming potential of the hydrofluorocarbon is not so small. For example, patent document 1 discloses a refrigeration cycle apparatus using, as a refrigerant, hydrofluorocarbon which does not include chlorine.
Fig. 4 shows a conventional refrigeration cycle apparatus described in the patent document 1. As shown in Fig. 4, the conventional refrigeration cycle apparatus includes an outdoor unit 5 and an indoor unit 6. The outdoor unit 5 includes a compressor 1, a heat exchanger 2a and a refrigerant flow rate controller 3 such as a capillary tube and an expansion valve, and these members are connected to one another through piping 4. The indoor unit 6 includes a heat exchanger 2b disposed in a space where air is conditioned. Service valves 8a and 8b are provided in the outdoor unit 5, and flare nuts 9a and 9b are provided in the indoor unit 6. One of connecting pipes 7 is connected to the service valve 8a and the flare nut 9a, and the other connecting pipe 7 is connected tot heat exchanger service valve 8b and the flare nut 9b. The outdoor unit 5 includes a four-way valve 10. The four-way valve 10 is connected to discharge-side piping 4 and suction-side piping 4 of the compressor 1, and the four-way valve 10 can switch between a condensation function and a vaporization function of the heat exchangers 2a and 2b. The outdoor unit 5 includes an accumulator 11 attached to a suction-side piping of the compressor 1.
In this refrigeration cycle apparatus, the compressor 1, the heat exchanger 2a, the refrigerant flow rate controller 3, the heat exchanger 2b and the accumulator 11 are connected to one another through the piping 4 and the connecting pipes 7, thereby constituting a refrigeration cycle, and hydrofluorocarbon is charged into the refrigeration cycle as a refrigerant.
In the refrigeration cycle apparatus having the above-described configuration, at the time of a cooling operation, a refrigerant which is compressed by the compressor 1 dissipates heat in the heat exchanger 2a, the refrigerant is condensed and liquefied, the refrigerant passes through the refrigerant flow rate controller 3 and becomes a low temperature gas-liquid mixture refrigerant. Then, in the heat exchanger 26 of the indoor unit 6, heat is absorbed from the refrigerant and the refrigerant is vaporized as dried, saturated and vaporized, and is again sucked into the compressor 1. The heat exchanger 2b absorbs heat from periphery and, the cooling operation is carried out. If the four-way valve 10 is operated and flow paths are switched, the refrigerant is condensed in the heat exchanger 2b, and the refrigerant is vaporized by the heat exchanger 2a. That is, a heating operation is carried out.

### [Prior Art Document]

### [Patent Document]

[Patent Document 1] Japanese Patent No.3497307

### [Summary of the Invention]

### [Problem to be Solved by the Invention]

However, the conventional configuration has problems that if a refrigerant whose chemical stability is not sufficient like hydrofluoroolefin having double bond is used, the hydrofluoroolefin having the double bond is cleaved due to influence of water or oxygen, the hydrofluoroolefin is decomposed, material having hydrofluoric acid as a main ingredient is generated, this deteriorates material used in the refrigeration cycle apparatus and refrigeration oil and therefore, the performance of the refrigeration cycle apparatus is deteriorated, and the refrigeration cycle apparatus is broken down at the worst.

The present invention has been accomplished to solve the above-described problems, and it is an object of the invention to provide a reliably refrigeration cycle apparatus having long service life which does not deteriorate performance by an inexpensive method.

### [Means for Solving the Problems]

To solve the conventional problems, the present invention provides a refrigeration cycle apparatus wherein a compressor into which refrigeration oil is charged, a first heat exchanger, a refrigerant flow rate controller such as a capillary tube and an expansion valve, a second heat exchanger which is disposed in a space where air is conditioned, and an accumulator are connected to one another through piping, thereby constituting a refrigeration cycle, a single refrigerant of hydrofluoroolefin or a mixture refrigerant having the hydrofluoroolefin as a basic ingredient is charged into the refrigeration cycle, and the refrigeration cycle includes an adsorbent device into which an adsorbent which adsorbs material having hydrofluoric acid as a main ingredient is charged.
The hydrofluoroolefin having the double bond is cleaved due to influence of water or oxygen, the hydrofluoroolefin is decomposed, material having hydrofluoric acid as a main ingredient is generated. According to the refrigeration cycle apparatus of the invention, it is possible to swiftly capture this material by the adsorbent device.

### [Effect of the invention]

Hydrofluoroolefin having the double bond is cleaved due to influence of water or oxygen, the hydrofluoroolefin is decomposed, material having hydrofluoric acid as a main ingredient is generated. According to the present invention, it is possible to provide a refrigeration cycle apparatus capable of swiftly capturing this material, the refrigeration cycle apparatus has long service life, does not hinder the performance of the refrigeration cycle or does not deteriorate efficiency.

### [Brief Description of the Drawings]

Fig. 1 is a cycle diagram of a refrigeration cycle apparatus according to an embodiment of the present invention;
Fig. 2 is a partial sectional view of an adsorbent device in a refrigeration cycle;
Fig. 3 is a characteristic diagram showing global warming potentials by a mixture ratio of a refrigerant in which two ingredients are mixed; and

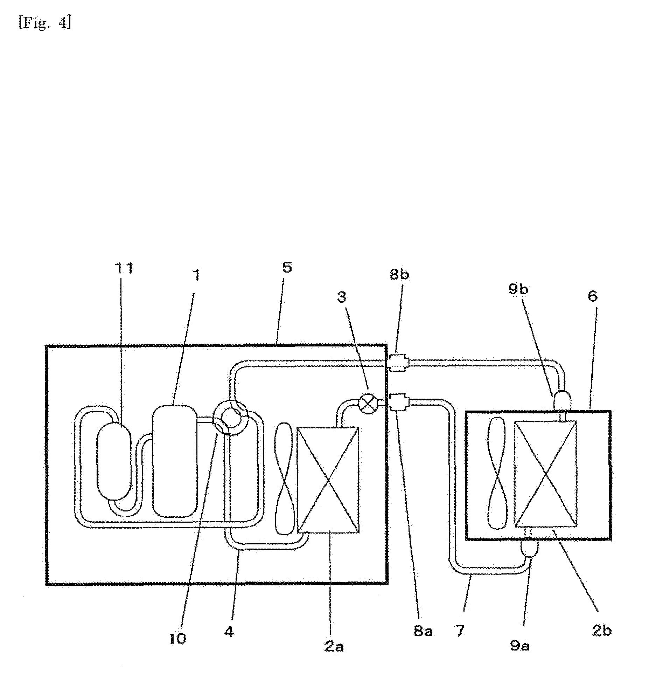

Fig. 4 is a cycle diagram of a conventional refrigeration cycle apparatus.

### [Explanation of Symbols]

- 21: compressor
- 22a: first heat exchanger
- 22b: second heat exchanger
- 23: refrigerant flow rate controller
- 30: four-way valve
- 32: adsorbent device
- 38: adsorbent

### [Mode for Carrying the invention]

A first aspect of the present invention provides a refrigeration cycle apparatus wherein a compressor into which refrigeration oil is charged, a first heat exchanger, a refrigerant flow rate controller such as a capillary tube and an expansion valve, a second heat exchanger which is disposed in a space where air is conditioned, and an accumulator are connected to one another through piping, thereby constituting a refrigeration cycle, a single refrigerant of hydrofluoroolefin or a mixture refrigerant having the hydrofluoroolefin as a basic ingredient is charged into the refrigeration cycle, and the refrigeration cycle includes an adsorbent device into which an adsorbent which adsorbs material having hydrofluoric acid as a main ingredient is charged. Hydrofluoroolefin having double bond is cleaved due to influence of water or oxygen, the hydrofluoroolefin. is decomposed, and material having hydrofluoric acid as a main ingredient is generated. According to this aspect, it is possible to swiftly adsorb the material, and corrosion of metal such as piping and a compressor can be prevented. It is possible to prevent a case where refrigeration oil is deteriorated and decomposed at an accelerated pace by the material having hydrofluoric acid as a main ingredient.
According to a second aspect of the invention, in the refrigeration cycle apparatus of the first aspect, the refrigeration cycle is provided with a four-way valve, and a condensation function and a vaporization function of the first heat exchanger and the second heat exchanger are switched by switching the four-way valve. According to this aspect, the refrigeration cycle apparatus can be used as a cooling and heating apparatus.
According to a third aspect of the invention, in the refrigeration cycle apparatus of the first or second aspect, as the mixture refrigerant, a refrigerant which is mixed with the hydrofluoroolefin is hydrofluorocarbon. As compared with a single refrigerant of hydrofluoroolefin, predetermined characteristic such as cooling capacity can be enhanced, and it becomes easy to use as a refrigerant.
According to a fourth aspect of the invention, in the refrigeration cycle apparatus of the third aspect, the hydrofluoroolefin is a refrigerant including tetrafluoropropene as a basic ingredient, the hydrofluorocarbon is a refrigerant having one or both of difluoromethane and pentafluoroethane, and global warming potential of the mixture refrigerant is 5 or higher and 750 or lower. Even if refrigerant which is not recovered and is vented to atmosphere, it is possible to minimize adverse affect for global warming.
According to a fifth aspect of the invention, in the refrigeration cycle apparatus of any one of the first to fourth aspects, the adsorbent is any one of ion-exchange resin, synthetic zeolite-based adsorbent and porous material coated with calcium, carbonate. Capturing performance of moisture and material in the refrigerant having hydrofluoric acid as a main ingredient is excellent.
According to a sixth aspect of the invention, in the refrigeration cycle apparatus of any one of the first to fifth aspects, the refrigeration oil is synthetic oil including oxygenated organic compound of any one of polyoxyalkyleneglycol, polyvinyl ether, copolymer of either of poly (oxy) alkyleneglycol or its monoether and polyvinyl ether, polyolester and polycarbonate as a main ingredient; or synthetic oil including alkylbenzene or α-olefin as a main ingredient.

### [Embodiment]

An embodiment of the present invention will be described with reference to the drawings. The invention is not limited to the embodiment.

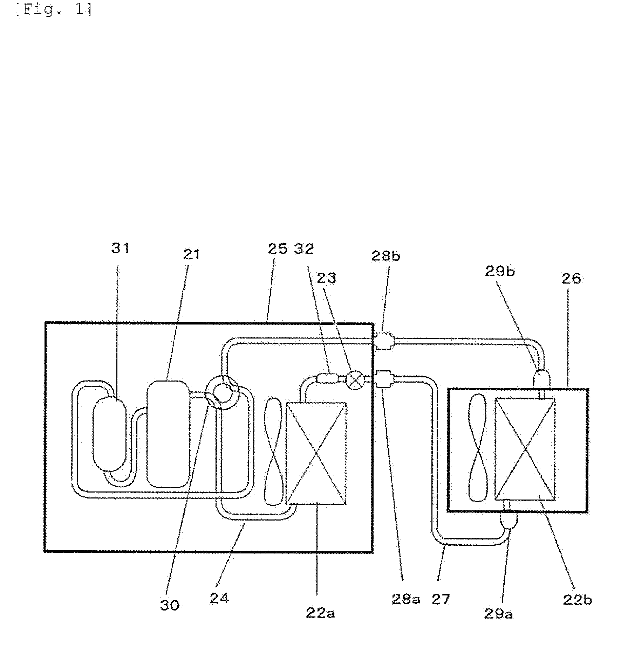

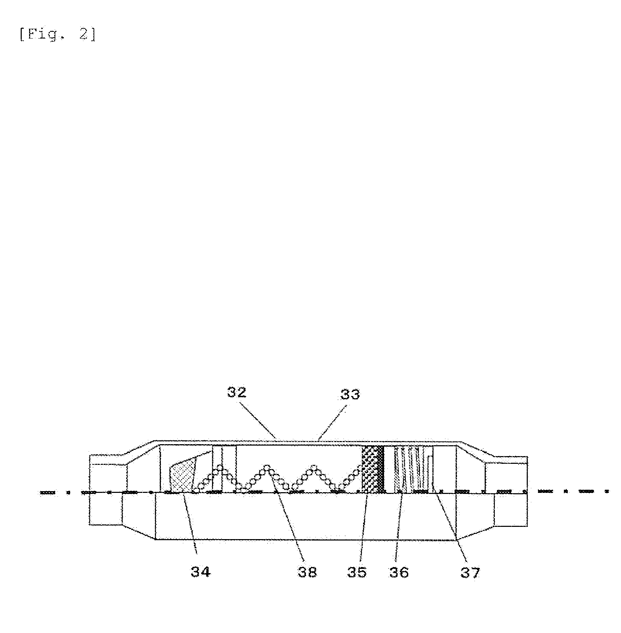

Fig. 1 is a cycle diagram of a refrigeration cycle apparatus of the embodiment of the invention. Fig. 2 is a partial sectional view of an adsorbent device.
As shown in Fig. 1, the refrigeration cycle apparatus of the invention includes an outdoor unit 25 and an indoor unit 26. The outdoor unit 25 includes a compressor 21, a first heat exchanger 22a and a refrigerant flow rate controller 23 such as a. capillary tube and an expansion valve. These members are connected to one another through piping 24. The indoor unit 26 includes a second heat exchanger 22b which is disposed in a space where air is conditioned. The outdoor unit 25 includes service valves 28a and 28b, and the indoor unit 26 includes flare nuts 29a and 29b. One of connecting pipes 27 is connected to the service valve 28a and the flare nut 29a, and the other connecting pipe 27 is connected to the service valve 28b and the flare nut 29b.
The outdoor unit 25 includes a four-way valve 30. The four-way valve 30 is connected to discharge-side piping 24 of the compressor 21 and a suction-side piping 24, and can switch between a condensation function and a vaporization function of heat exchangers 22a and 22b. The outdoor unit 25 may have an accumulator 31 attached to a suction-side piping of the compressor 21. An adsorbent device 32 is provided in this embodiment. The higher a ratio of liquid phase of a hydrofluoroolefin refrigerant having double bond becomes, the higher the adsorption effect of water or material having hydrofluoric acid as a main ingredient becomes. Therefore, it is preferable to dispose the adsorbent device 32 in a front portion or a rear portion near the refrigerant flow rate controller 23.

Next, the adsorbent device 32 disposed in the refrigeration cycle apparatus will be described.
As shown in Fig. 2, the adsorbent device 32 has a dryer body 33 constituting a container. A first filter 34, a second filter 35, a spring 36, a spring stopper 37 which fixes the spring 36, and an adsorbent 38 are accommodated in the dryer body 33.
An inner diameter of the dryer body 33 is larger than that of the piping 24. As shown in Fig. 1, the adsorbent device 32 is provided at the piping 24 located between the first heat exchanger 22a and the refrigerant flow rate controller 23.
The spring 36 is disposed between the second filter 35 and the spring stopper 37, and the spring 36 biases the second filter 35 toward the first filter 34. The adsorbent 38 is charged between the first filter 34 and the second filter 35.

There is a possibility that hydrofluoroolefin having double bond is cleaved due to influence of water or oxygen, the hydrofluoroolefin is decomposed, and material having hydrofluoric acid as a main ingredient is generated. If a refrigerant including moisture and material having hydrofluoric acid as a main ingredient passes through the adsorbent device 32 during the cooling operation or the a heating operation, the moisture and material having hydrofluoric acid as a main ingredient in the refrigerant is captured by the adsorbent 38 disposed in the adsorbent device 32. Therefore, material used in the refrigeration cycle apparatus and refrigeration oil are not deteriorated by the hydrofluoric acid, performance of the refrigeration cycle apparatus is not deteriorated, the performance is not deteriorated by the inexpensive method, and it is possible to provide a reliable refrigeration cycle apparatus having long service life. Abrasion vibration of the adsorbent 38 is generated by vibration from the compressor 21 and ripple of refrigerant, but since the adsorbent device 32 includes the spring 36, it is possible to prevent the abrasion vibration.

Examples of materials which can be used for the adsorbent 38 are inorganic material, organic material and a mixture thereof. In terms of industrial use, material having zeolite, silica or ion-exchange resin as a main ingredient can be used. Preferable materials are ion-exchange resin, synthetic zeolite-based adsorbent and porous material coated with calcium carbonate, and porous-based material having synthetic zeolite is most preferable.
A preferable shape of the adsorbent 38 is a spherical shape, but in terms of industrial use, if the adsorbent can be fixed by a filter and is not carried away, a powder adsorbent, a foam adsorbent and a fiber absorbent can also be used.

A single refrigerant of hydrofluoroolefin or a refrigerant in which hydrofluoroolefin as a basic ingredient and hydrofluorocarbon (e.g., HFC32 or HFC125) having no double bond are mixed is charged into the refrigeration cycle apparatus. The hydrofluoroolefin is a refrigerant including tetrafluoropropene (HFO1234yf) as a basic ingredient, and hydrofluorocarbon is a refrigerant including one or both of difluoromethane (HFC32) and pentafluoroethane (HFC125). A mixture refrigerant of hydrofluoroolefin and hydrofluorocarbon includes two ingredients or three ingredients so that global warming potential (GWP) becomes 5 or higher and 750 or lower, and more preferably, 5 or higher and 300 or lower.

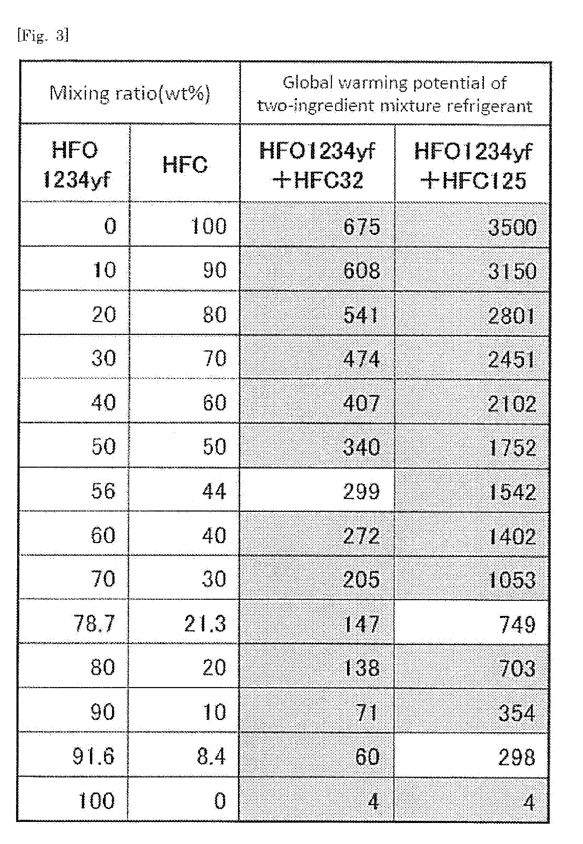

Fig. 3 is a characteristic diagram showing global warming potential by a mixture ratio of a refrigerant in which two ingredients (tetrafluoropropene and difluoromethane, or tetrafluoropropene and pentafluoroethane) are mixed. More specifically, as shown in Fig. 3, in the case of the two ingredients, in order to mix tetrafluoropropene and difluoromethane and to set GWP to 300 or lower, an amount of difluoromethane is set to 44 wt% or lower. In order to mix tetrafluoropropene and pentafluoroethane and to set GWP to 750 or lower, an amount of pentafluoroethane is set to 21.3 wt% or lower, and in order to set GWP to 300 or lower, the amount of pentafluoroethane is set to 8.4 wt% or lower.
When a refrigerant is set to a single refrigerant of tetrafluoropropene, GWP becomes 4 and shows an extremely excellent value. However, since specific volume is increased as compared with a refrigerant in which tetrafluoropropene is mixed with hydrofluorocarbon, capacity is deteriorated and a larger refrigeration cycle apparatus is required. In other word, if a refrigerant in which hydrofluoroolefin having double bond between carbon and carbon is mixed as a basic ingredient with hydrofluorocarbon having no double bond, and this mixed refrigerant is used, predetermined characteristic such as capacity can be enhanced and it becomes easy to use the refrigerant, as compared with a refrigerant having a single refrigerant of hydrofluoroolefin. In a refrigerant to be charged, including a single refrigerant, a ratio of tetrafluoropropene should appropriately be selected in accordance with a purpose of a refrigeration cycle apparatus in which a compressor is incorporated and in accordance with conditions such as restriction of GWP.

As refrigerant oil which is charged into the compressor 21, oxygenated organic compound is selected as a main ingredient from at least one kind of polyoxyalkyleneglycol, polyvinyl ether, copolymer of either of poly (oxy) alkyleneglycol or its monoether and polyvinyl ether, polyolester and polycarbonate as disclosed in Japanese Patent Application Laid-open No.2008-115266, and is added various kinds of addition agents such as extreme pressure agent, oiliness agent, antioxidant, acid capturing agent and antifoaming agent selected as necessary. It is preferable that the refrigerant oil has compatibility with respect to the refrigerant. According to this, since it is possible to easily recover refrigeration oil to the compressor, the reliability of the compressor of the refrigeration cycle apparatus can be secured. In a small refrigeration cycle apparatus such as a domestic air conditioner, if flow velocity of a refrigerant through piping is fast, even refrigeration oil having no compatibility with respect to the refrigerant such as alkylbenzene and α-olefin can be used in effect.

According to the refrigeration cycle apparatus having the above-described configuration, when a cooling operation is carried out, a refrigerant compressed by the compressor 21 dissipates heat in the first heat exchanger 22a and is liquefied, the refrigerant passes through the refrigerant flow rate controller 23 and becomes a low temperature gas-liquid mixture refrigerant, the refrigerant absorbs heat in the second heat exchanger 22b in the indoor unit 26 and becomes a vaporized refrigerant, and the refrigerant is again sucked into the compressor. If the four-way valve 30 is operated and the flow paths are switched, the refrigerant is condensed in the second heat exchanger 22b, and the refrigerant is vaporized by the first heat exchanger 22a. That is, a heating operation is carried out.
The present invention has been described based on the refrigeration cycle apparatus having the cooling and heating air conditioner exclusively, but even if other refrigeration cycle apparatuses are used, the same effect can be obtained only if the refrigeration cycle apparatuses are not open type, and the technique of the invention can be applied to all of a refrigerator-freezer, a freezer, a dehumidifier, a heat pump type washing machine having a dryer, a heat pump type water heater and a beverage vending machine of course.

### [Industrial Applicability]

According to the refrigeration cycle apparatus of the present invention, the hydrofluoroolefin having the double bond is cleaved due to influence of water or oxygen, the hydrofluoroolefin is decomposed, material having hydrofluoric acid as a main ingredient is generated, and this material can be adsorbed. Therefore, the refrigeration cycle apparatus can be applied to an air conditioner, car air conditioner, water heater, a refrigerator-freezer, a freezer, a dehumidifier, a heat pump type washing machine having a dryer, a heat pump type water heater and a beverage vending machine.

## Claims

1. A refrigeration cycle apparatus wherein a compressor into which refrigeration oil is charged, a first heat exchanger, a refrigerant flow rate controller such as a capillary tube and an expansion valve, a second heat exchanger which is disposed in a space where air is conditioned, and an accumulator are connected to one another through piping, thereby constituting a refrigeration cycle, a single refrigerant of hydrofluoroolefin or a mixture refrigerant having the hydrofluoroolefin as a basic ingredient is charged into the refrigeration cycle, and the refrigeration cycle includes an adsorbent device into which an adsorbent which adsorbs material having hydrofluoric acid as a main ingredient is charged.

2. The refrigeration cycle apparatus according to claim 1, wherein the refrigeration cycle is provided with a four-way valve, and a condensation function and a vaporization function of the first heat exchanger and the second heat exchanger are switched by switching the four-way valve.

3. The refrigeration cycle apparatus according to claim 1 or 2, wherein as the mixture refrigerant, a refrigerant which is mixed with the hydrofluoroolefin is hydrofluorocarbon.

4. The refrigeration cycle apparatus according to claim 3, wherein the hydrofluoroolefin is a refrigerant including tetrafluoropropene as a basic ingredient, the hydrofluorocarbon is a refrigerant having one or both of difluoromethane and pentafluoroethane, and global warming potential of the mixture refrigerant is 5 or higher and 750 or lower.

5. The refrigeration cycle apparatus according to any one of claims 1 to 4, wherein the adsorbent is any one of ion-exchange resin, synthetic zeolite-based adsorbent and porous material coated with calcium carbonate.

6. The refrigeration cycle apparatus according to any one of claims 1 to 5, wherein the refrigeration oil is synthetic oil including oxygenated organic compound of any one of polyoxyalkyleneglycol, polyvinyl ether, copolymer of either of poly (oxy) alkyleneglycol or its monoether and polyvinyl ether, polyolester and polycarbonate as a main ingredient; or synthetic oil including alkylbensene or α-olefin as a main ingredient.
